# FASCICULE DE BREVET EUROPEEN

(11) **EP 2 250 413 B1**
(45) Date de publication et mention de la délivrance du brevet: **31.08.2011**
(21) Numéro de dépôt: 09719145.6
(22) Date de dépôt: 26.02.2009
(51) Int. Cl.: F16K 31/122, B29C 49/42

(54) **INSTALLATION DE SOUFFLAGE DE RECIPIENTS THERMOPLASTIQUES EQUIPEE D'UN COMPOSANT PNEUMATIQUE FORMANT ELECTROVANNE ET INCORPORANT UN REGLAGE DE DEBIT**
VORRICHTUNG ZUM BLASEN THERMOPLASTISCHER GEFÄSSE MIT PNEUMATISCHER KOMPONENTE ZUR STEUERUNG EINES ELEKTROVENTILS UND MIT FLUSSRATENEINSTELLUNG
EQUIPMENT FOR BLOWING THERMOPLASTIC VESSELS, PROVIDED WITH A PNEUMATIC COMPONENT DEFINING AN ELECTROVALVE AND WITH FLOW RATE ADJUSTMENT

(30) Priorité: 03.03.2008 FR 0851370
(43) Date de publication de la demande: 17.11.2010
(73) Titulaire: Sidel Participations, 76930 Octeville Sur Mer (FR)
(72) Inventeur: ROUSSEAU, Nicolas, F-76930 Octeville Sur Mer (FR); LEMBLE, Thierry, F-76930 Octeville Sur Mer (FR)
(74) Mandataire: Cabinet Plasseraud
(86) Numéro de dépôt international: PCT/FR2009/050306
(87) Numéro de publication internationale: WO 2009/112765

(56) Documents cités:
- EP-A- 1 860 359
- JP-A- 2003 227 577
- US-A1- 2003 000 380
- US-A1- 2006 197 049
- US-B1- 6 244 562
- US-B1- 6 244 563

## Description

L'invention concerne d'une façon générale le domaine de la distribution de fluide pneumatique sous pression, par exemple bien que non exclusivement, d'air sous pression, pour le présoufflage et/ou pour le soufflage dans les installations de fabrication de récipients en matière thermoplastique, notamment en PET, par soufflage ou étirage-soufflage d'ébauches, notamment de préformes, chauffées.

Une installation de fabrication de récipients en matière thermoplastique, notamment en PET, par soufflage ou étirage-soufflage d'ébauches, notamment de préformes, chauffées comprend :
- au moins un moule de soufflage propre à recevoir une ébauche, notamment une préforme,
- des moyens de soufflage pneumatique associés audit moule et comportant une tuyère propre à être mise en communication étanche avec le volume intérieur de ladite ébauche enfermée dans ledit moule, et
- au moins une électrovanne de présoufflage propre à établir une liaison fluidique entre ladite tuyère (et donc le volume intérieur de l'ébauche) et une source de fluide pneumatique sous une pression de présoufflage, qui pour fixer les idées peut typiquement être de l'ordre de 5 à 15x10⁵ Pa avec un débit qui peut être de l'ordre de 80 N1 (Normolitres).

L'installation peut comprendre également au moins une électrovanne de soufflage propre à établir une liaison fluidique entre ladite tuyère (et donc le volume intérieur de l'ébauche) et une source de fluide pneumatique sous une pression de soufflage supérieure à la susdite pression de présoufflage, qui pour fixer les idées peut typiquement être de l'ordre de 40x10⁵ Pa avec un débit qui peut être de l'ordre de 800 N1.

Dans les installations actuelles, les électrovannes de présoufflage et de soufflage sont de simples interrupteurs pneumatiques de mise en relation du volume intérieur de l'ébauche avec la source appropriée, d'abord la source de fluide de présoufflage à travers l'électrovanne de présoufflage pour provoquer une première déformation de l'ébauche jusqu'à la forme approximative du récipient à obtenir, puis la source de fluide de soufflage à travers l'électrovanne de soufflage pour finir de manière fine et complète la déformation jusqu'à la forme exacte du récipient final. Ces électrovannes de présoufflage et de soufflage fonctionnent donc en tout ou rien.

Par ailleurs, pour ce qui concerne plus spécifiquement le présoufflage, le débit du fluide de présoufflage est un paramètre qui, parmi plusieurs autres et bien qu'il ne soit pas le plus important, est déterminant en ce qui concerne les caractéristiques notamment de forme et de dimensions du récipient final. De ce fait, certains écarts de forme et/ou de dimensions apparaissant dans les récipients finaux par rapport à des valeurs de référence ou de consigne peuvent être compensés ou annulés en modifiant le débit du fluide de présoufflage essentiellement. A cet effet, le circuit d'alimentation en fluide de présoufflage comporte une restriction réglable permettant d'effectuer l'ajustement requis du débit du fluide de présoufflage.

L'agencement qui vient d'être décrit nécessite donc la mise en oeuvre, dans le circuit d'alimentation de la tuyère en fluide de présouflage, d'au moins deux composants pneumatiques, à savoir au moins une électrovanne de présoufflage et une restriction réglable. Ces composants pneumatiques sont coûteux et sont consommateurs d'espace alors que l'environnement du moule et de la tuyère de présoufflage est généralement très encombré.

Le document US 2003/0000380 décrit un dispositif de commande pneumatique, en particulier pour la fabrication de recipient par soufflage.

L'invention a pour but de proposer une solution technique perfectionnée qui permette d'écarter les inconvénients évoqués plus haut dans les installations de fabrication de récipients thermoplastiques du type considéré.

A ces fins, l'invention propose une installation selon la revendication 1.

Ainsi, les dispositions conformes à l'invention permettent de constituer un composant pneumatique unique, regroupant les deux fonctions requises, à savoir la fonction d'électrovanne pneumatique agissant comme interrupteur pneumatique et la fonction de réglage du débit de fluide pneumatique traversant la partie électrovanne, qui est de fabrication moins coûteuse et de moindre encombrement que les deux composants équivalents utilisés jusqu'à présent. L'équipement du circuit de présoufflage avec un tel composant pneumatique procure les résultats les plus intéressants en termes d'ajustement des caractéristiques des résultats finaux.

Le fait d'équiper conformément à l'invention le circuit d'alimentation en fluide de soufflage entraîne un résultat qui certes est moins avantageux en raison de la pression et du débit plus élevés du fluide de soufflage, mais que l'on peut cependant souhaiter ne pas négliger. Dans ces conditions, l'installation précitée équipée conformément à l'invention peut comprendre en outre au moins une électrovanne de soufflage propre à établir une liaison fluidique entre ladite tuyère et une source de fluide pneumatique sous une pression de soufflage supérieure à la susdite pression de présoufflage, ladite au moins une électrovanne de soufflage étant agencée sous forme d'un composant pneumatique comprenant :
- un corps ;
- un conduit s'étendant à travers ce corps pour relier un orifice d'entrée et un orifice de sortie pour un fluide pneumatique sous pression ;
- un siège dans ledit conduit pour un obturateur mobile qui est propre à ouvrir ou fermer ledit conduit ;
- une chambre dans ledit corps ;
- un piston mobile dans ladite chambre, ce piston étant solidaire dudit obturateur et possédant deux faces de travail opposées ;
- deux canaux dans ledit corps qui débouchent dans ladite chambre de part et d'autre du piston quelle que soit la position occupée par celui-ci, lesdits canaux étant raccordés à un circuit de commande pneumatique propre à alimenter lesdits canaux en fluide pneumatique de commande pour commander le déplacement dudit piston dans un sens ou dans l'autre dans ladite chambre ; et
- une butée dans ladite chambre pour bloquer le déplacement du piston de manière à définir une position d'ouverture dudit obturateur vis-à-vis dudit siège ;
laquelle installation se caractérise, selon l'invention, en ce que ladite butée est déplaçable dans la chambre, ce grâce à quoi la position d'ouverture de l'obturateur par rapport au siège peut être réglée et le débit dudit fluide pneumatique sous une pression de soufflage dans le conduit peut être ajusté.

Dans un mode de réalisation concret qui est actuellement préféré, on prévoit que le corps comporte un alésage sensiblement parallèle à la direction de déplacement du piston et débouchant, d'un côté, dans ladite chambre et, de l'autre côté, sur une face externe dudit corps et que la butée déplaçable soit logée à coulissement axial dans ledit alésage. On constitue ainsi un composant pneumatique compact et ne comportant qu'un nombre réduit de pièces composantes de fabrication simple.

Dans un exemple de réalisation simple ne faisant pas partie de l'invention, il est possible de faire en sorte qu'à la butée soient associés des moyens d'entraînement manuel accessibles de l'extérieur dudit corps. On constitue ainsi un composant pneumatique unique de structure simple et relativement peu onéreuse dans lequel la fonction de réglage du débit du fluide pneumatique est propre à être assurée de façon manuelle.

Selon l'invention, on prévoit avantageusement qu'à la butée soient associés des moyens moteurs solidarisés audit corps, lesdits moyens moteurs comprennant un moteur électrique ayant un arbre rotatif de sortie qui est fileté et qui est engagé a rotation dans un alésage taraudé de ladite butée, ledit moteur électrique pouvant être de tout type approprié, tel que par exemple un moteur pas à pas, et/ou comporter une démultiplication permettant d'obtenir la vitesse souhaitée de déplacement de la butée.

Grâce à la mise en oeuvre des dispositions qui viennent d'être exposées, on est en mesure de constituer une installation de fabrication de récipients thermoplastiques qui comporte un asservissement du débit de fluide pneumatique de présoufflage, et éventuellement du fluide pneumatique de soufflage, propre à réguler automatiquement une ou plusieurs caractéristiques des récipients finaux.

L'invention sera mieux comprise à la lecture de la description détaillée qui suit de certains modes de réalisation, donnés uniquement à titre d'exemples nullement limitatifs. Dans cette description, on se réfère aux dessins annexés sur lesquels :
- les figure 1 et 2 illustrent, de façon très schématique, un mode de réalisation d'un composant pneumatique à fonction d'électrovanne pneumatique, montré respectivement dans deux positions fonctionnelles différentes, qui est propre à équiper une installation ne faisant pas partie de l'invention ;
- la figure 3 illustre, de façon très schématique, le composant pneumatique des figures 1 et 2 dans une position fonctionnelle différente de celle montrée aux figures 1 et 2 dans sa fonction de réglage du débit de fluide pneumatique ;
- la figure 4 illustre, de façon très schématique, une autre mode de réalisation, préféré, d'un composant pneumatique propre à équiper une installation conforme à l'invention et montré dans la même position fonctionnelle qu'à la figure 3 ; et
- la figure 5 illustre, de façon très schématique, une partie d'installation conforme à l'invention mettant en oeuvre le composant pneumatique de la figure 4.

On précisera tout d'abord que, dans la description qui suit, les termes « haut », « bas », « supérieur », « inférieur » sont utilisés, par souci de simplification de l'explication, uniquement en référence à la position du composant pneumatique tel qu'il apparaît sur les dessins.

L'invention vise à améliorer le fonctionnement des installations de fabrication de récipients en matière thermoplastique, notamment en PET, par soufflage ou étirage-soufflage d'ébauches, notamment de préformes, chauffées. Une telle installation comprend
- au moins un moule de soufflage propre à recevoir une ébauche,
- des moyens de soufflage pneumatique associés audit moule et comportant une tuyère propre à être mise en communication avec ladite ébauche enfermée dans ledit moule, et
- au moins une électrovanne de présoufflage propre à établir une liaison fluidique entre ladite tuyère et une source de fluide pneumatique sous une pression de présoufflage.

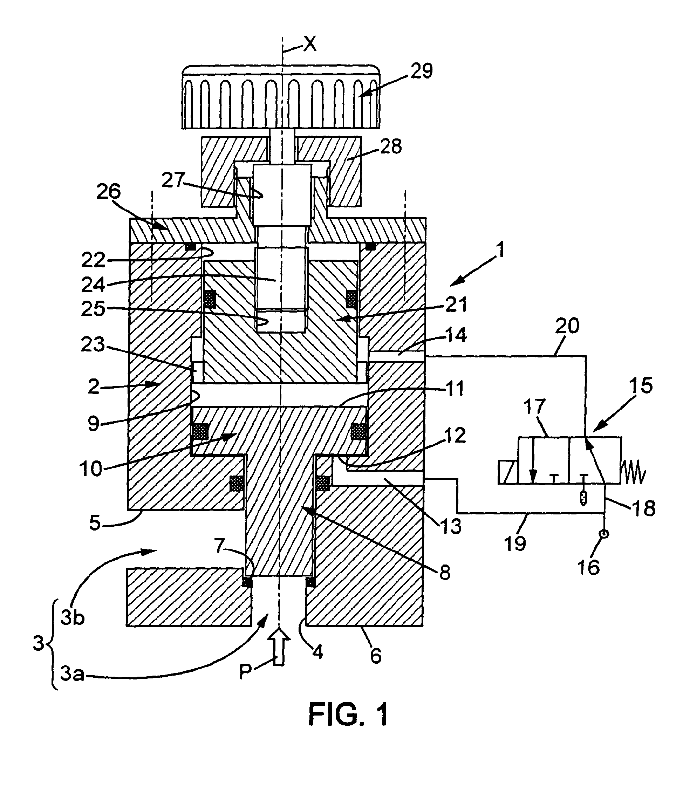

A cette fin, il est prévu que la ou chaque électrovanne de présoufflage soit agencée sous forme d'un composant pneumatique illustré à la figure 1 et désigné dans son ensemble par la référence numérique 1. Le composant 1 pneumatique comprend un corps 2, en général métallique, et un conduit 3 s'étendant à travers ce corps 2 pour relier un orifice 4 d'entrée et un orifice 5 de sortie pour un fluide pneumatique sous pression (schématisé par la flèche P) ; dans l'exemple de réalisation de la figure 1, ledit conduit 3 comprend un premier tronçon de conduit 3a qui s'étend coaxialement à un axe X du corps 2 à partir d'une face 6 (face inférieure sur la figure 1) et un second tronçon de conduit 3b qui s'étend radialement à partir dudit tronçon coaxial 3a.

Un siège 7 est formé dans ledit conduit 3 pour recevoir un obturateur 8 mobile qui est propre à ouvrir ou fermer ledit conduit 3 ; dans l'exemple illustré, le siège 7 est formé sur l'extrémité du tronçon de conduit 3a, à l'intersection avec le tronçon du conduit 3b radial.

Une chambre 9 est formée dans le corps 2 et un piston 10 mobile est abrité dans ladite chambre 9, ce piston 10 étant solidaire dudit obturateur 8. Le piston 10 possède deux faces de travail opposées, respectivement une face 11 supérieure (sur le dessin) et une face 12 inférieure sur laquelle l'obturateur 8 fait saillie et qui de ce fait possède une surface inférieure à la surface de la face 11 supérieure.

Deux canaux 13, 14 sont formés dans le corps 2 et débouchent dans ladite chambre 9 de part et d'autre du piston 10 quelle que soit la position occupée par celui-ci : le canal 13 inférieur débouche à la base de la chambre 9, tandis que le canal 14 supérieur débouche au moins à hauteur du piston 10 dans sa position la plus élevée dans la chambre 9. Les canaux 13, 14 sont raccordés à un circuit 15 de commande pneumatique propre à alimenter lesdits canaux en fluide pneumatique de commande (alimenté en 16) pour commander le déplacement dudit piston dans un sens ou dans l'autre dans ladite chambre (fonction de vérin pneumatique à double effet). En pratique, le fluide pneumatique de commande est de l'air comprimé sous pression industrielle d'environ 6x10⁵ Pa (6 bars).

A titre d'exemple, le circuit 15 de commande pneumatique peut comprendre une électrovanne 17 de commande à tiroir coulissant à une voie et deux positions. La source 16 de fluide pneumatique de commande est raccordée par une liaison 18 à l'entrée de l'électrovanne 17 de commande et par une liaison 19 à l'entrée du canal 13 inférieur ; la sortie de l'électrovanne 17 de commande est raccordée par une liaison 20 à l'entrée du canal 14 supérieur.

Dans la position représentée à la figure 1, l'électrovanne 17 de commande est dans une position raccordant les liaisons 18 et 20. Les deux faces 11 et 12 du piston 10 sont alors soumises à la pression du fluide de commande et, en raison du différentiel de surface des deux faces 11, 12, le piston 10 est repoussé vers le bas de la chambre 9 en positionnant l'obturateur 8 contre son siège 7.

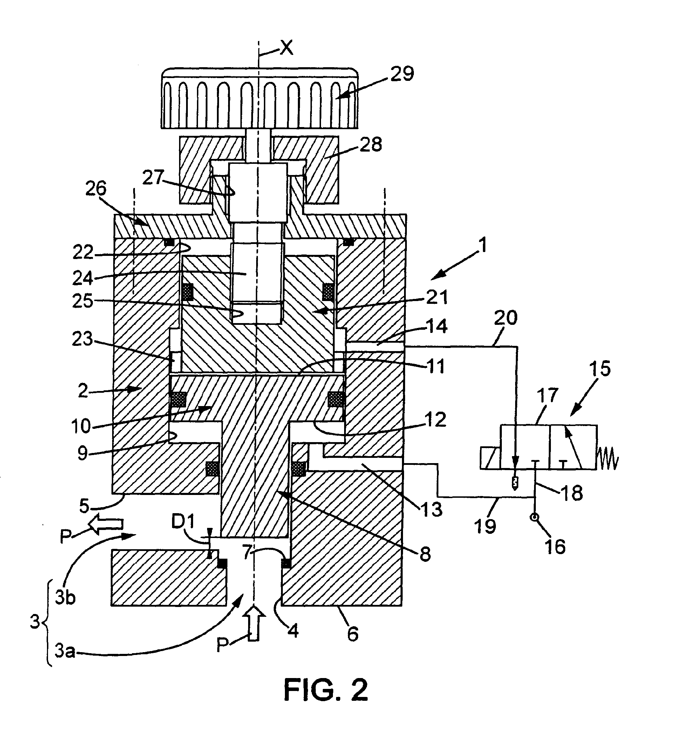

Dans la position représentée à la figure 2, le tiroir de l'électrovanne 17 de commande a été déplacé dans son autre position et interrompt le raccordement des liaisons 18 et 20. Seule alors la face 12 inférieure du piston 10 est soumise à la pression du fluide pneumatique de commande et le piston 10 est repoussé vers le haut en entraînant l'obturateur 8 qui quitte son siège 7. Les orifices d'entrée 4 et de sortie 5 sont ainsi mis en communication.

Dans la partie supérieure de la chambre 9 est prévue une butée 21 propre à bloquer le déplacement vers le haut du piston 10 de manière à définir une position d'ouverture dudit obturateur 8 vis-à-vis dudit siège 7.

Conformément à l'invention, la butée 21 est déplaçable, axialement, dans la chambre 9 sous l'action de moyens d'entraînement dont il sera question ci-après, de sorte qu'il est possible de régler la course de remontée du piston 10, et donc la course de l'obturateur 8 vis-à-vis du siège 7.

A la figure 2, la butée 21 déplaçable est montrée dans une position intermédiaire de sorte que la course du piston 10 est limitée et l'intervalle D1 entre l'obturateur 8 et son siège 7 est relativement faible. Il en résulte un débit réduit du fluide entre les orifices d'entrée 4 et de sortie 5.

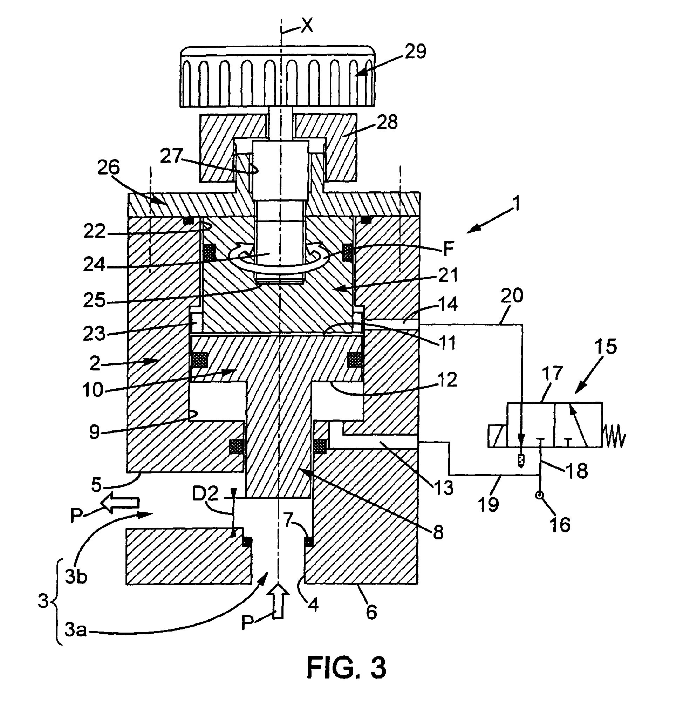

A la figure 3, la butée 21 déplaçable est montrée remontée au maximum dans la chambre 9, de sorte que la course du piston 10 est maximale. L'intervalle D2 entre l'obturateur 8 et son siège 7 est à sa valeur maximale et le fluide peut alors circuler à plein débit entre les orifices 4 d'entrée et 5 de sortie.

La butée 21 peut être réalisée de toute façon appropriée pour l'obtention du résultat recherché. Ainsi, il serait possible de prévoir, de façon structurellement simple, d'équiper la paroi supérieure de la chambre 9 avec une simple tige filetée qui serait engagée à vissage à travers ladite paroi et dont la rotation entraînerait la variation de position de son extrémité sur laquelle viendrait buter le piston 10.

Toutefois, notamment pour des vitesses de fonctionnement élevées et le maintien d'une durée de vie importante, on peut avoir recours à l'agencement suivant. Le corps 2 comporte un alésage 22 qui est sensiblement parallèle à la direction de déplacement du piston 10, c'est-à-dire sensiblement coaxial à l'axe X précité, et qui débouche, d'un côté, dans ladite chambre 9 et, de l'autre côté, sur une face externe (la face supérieure sur les dessins) dudit corps 2. La butée 21 déplaçable est logée à coulissement axial étanche dans ledit alésage 22 en étant bloquée en rotation par tout moyen connu (non montré).

Dans certaines positions, la butée est susceptible d'interférer avec l'orifice par lequel le canal 14 supérieur débouche dans la chambre 9. Pour que le fluide de commande puisse cependant parvenir correctement jusqu'à la face 11 supérieure du piston 10, la butée 21 peut être pourvue de passages, ou d'encoches 23 périphériques comme montré sur les figures.

Le déplacement axial de la butée 21 peut être obtenu par la rotation (double flèche F à la figure 3) d'un arbre 24 fileté, disposé coaxialement à l'axe X et bloqué axialement, qui est engagé dans un alésage 25 taraudé creusé dans la butée 21. L'arbre 24 est mis en rotation par tout moyen d'entraînement approprié dont deux exemples sont donnés ci-après.

Aux figures 1 à 3, la butée 21 comporte des moyens de préhension accessibles de l'extérieur dudit corps 2 et constituant un moyen d'entraînement manuel. A cet effet, sur le haut du corps 2 est rapportée (par exemple vissée) une plaque 26 fermant l'alésage 22 et agencée avec un passage 27 traversé par l'arbre 24 et dans lequel ce dernier peut tourillonner librement. Le blocage axial de l'arbre 24 peut être obtenu grâce à des épaulements complémentaires prévus, d'une part, sur l'arbre 24 et, d'autre part, dans le passage 27 et dans un écrou 28 de retenue. L'extrémité libre de l'arbre 24 est solidaire en rotation d'un bouton 29, d'une poignée ou de tout autre organe d'actionnement. On peut en outre avantageusement prévoir un système d'index (non montré) associé en rotation à l'arbre 24 ou à l'organe d'actionnement pour repérer la position angulaire de l'arbre 24 traduisant la valeur de l'intervalle entre l'obturateur 8 et le siège 7, et donc le débit du fluide entre les orifices 4 et 5 (le système d'index pouvant être directement gradué en débit).

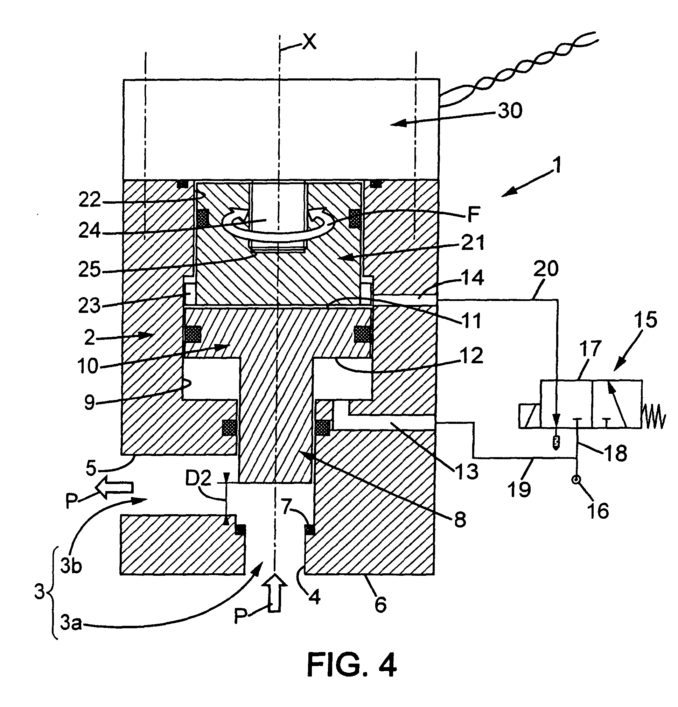

A la figure 4 est représenté un autre mode de réalisation, qui est actuellement préféré, d'un composant pneumatique propre à être mis en oeuvre dans une installation conforme à l'invention et qui est montré dans les mêmes positions fonctionnelles qu'à la figure 3. Cet autre mode de réalisation incorpore une variante de réalisation du moyen d'entraînement de la butée 21 : le moyen d'entraînement manuel illustré aux figures 1 à 3 est remplacé par un moyen d'entraînement motorisé faisant appel à des moyens moteurs solidarisés au corps 2. De façon avantageuse, lesdits moyens moteurs comprennent un moteur 30 électrique ayant un arbre rotatif de sortie qui constitue le susdit arbre 24 ou qui est accouplé à l'arbre 24 par l'intermédiaire d'un réducteur propre à faire tourner l'arbre 24 à toute vitesse souhaitée. Le moteur 30 électrique peut être de tout type approprié, par exemple un moteur pas à pas.

Dans une installation agencée conformément à l'invention, l'électrovanne de présoufflage est constituée par un composant pneumatique à butée déplaçable tel que décrit ci-dessus, qui permet non seulement d'assurer la fonction d'interrupteur pneumatique pour l'opération de présoufflage, mais qui permet également d'assurer le réglage du débit du fluide de présoufflage en fonction des besoins, notamment pour modifier certaines caractéristiques des récipients finaux. Ainsi, ces deux fonctions d'interrupteur pneumatique et de réglage du débit, qui jusqu'à présent étaient dévolues à des composants pneumatiques distincts et localisés en des emplacements différents, sont désormais assurées par un seul et même composant pneumatique moins onéreux et moins encombrant que les deux composants antérieurs.

Bien que l'application la plus intéressante du composant pneumatique conforme à l'invention concerne la distribution du fluide de présoufflage, il n'est pas exclu toutefois d'aménager de la même manière la distribution de fluide de soufflage. Ainsi, dans une installation telle que présentée plus haut qui comprend en outre au moins une électrovanne de soufflage propre à établir une liaison fluidique entre ladite tuyère et une source de fluide pneumatique sous une pression de soufflage supérieure à la susdite pression de présoufflage, cette électrovanne de soufflage est agencée sous forme d'un composant 1 pneumatique comprenant :
- un corps 2 ;
- un conduit 3 s'étendant à travers ce corps 2 pour relier un orifice 4 d'entrée et un orifice 5 de sortie pour ledit fluide pneumatique sous une pression de soufflage ;
- un siège 7 dans ledit conduit 3 pour un obturateur 8 mobile qui est propre à ouvrir ou fermer ledit conduit 3 ;
- une chambre 9 dans ledit corps 2 ;
- un piston 10 mobile dans ladite chambre 9, ce piston 10 étant solidaire dudit obturateur 8 et possédant deux faces 11, 12 de travail opposées ;
- deux canaux 13, 14 dans ledit corps 2 qui débouchent dans ladite chambre 9 de part et d'autre du piston 10 quelle que soit la position occupée par celui-ci, lesdits canaux 13, 14 étant raccordés à un circuit 15 de commande pneumatique propre à alimenter lesdits canaux 13, 14 en fluide pneumatique de commande pour commander le déplacement dudit piston 10 dans un sens ou dans l'autre dans ladite chambre 9 ; et
- une butée 21 dans ladite chambre 9 pour bloquer le déplacement du piston 10 de manière à définir une position d'ouverture dudit obturateur 8 vis-à-vis dudit siège 7.

Dans ce cas, il est prévu, conformément à l'invention, que ladite butée 21 est déplaçable dans la chambre 9, ce grâce à quoi la position d'ouverture de l'obturateur 8 par rapport au siège 7 peut être réglée et le débit dudit fluide pneumatique sous une pression de soufflage dans le conduit 3 peut être ajusté.

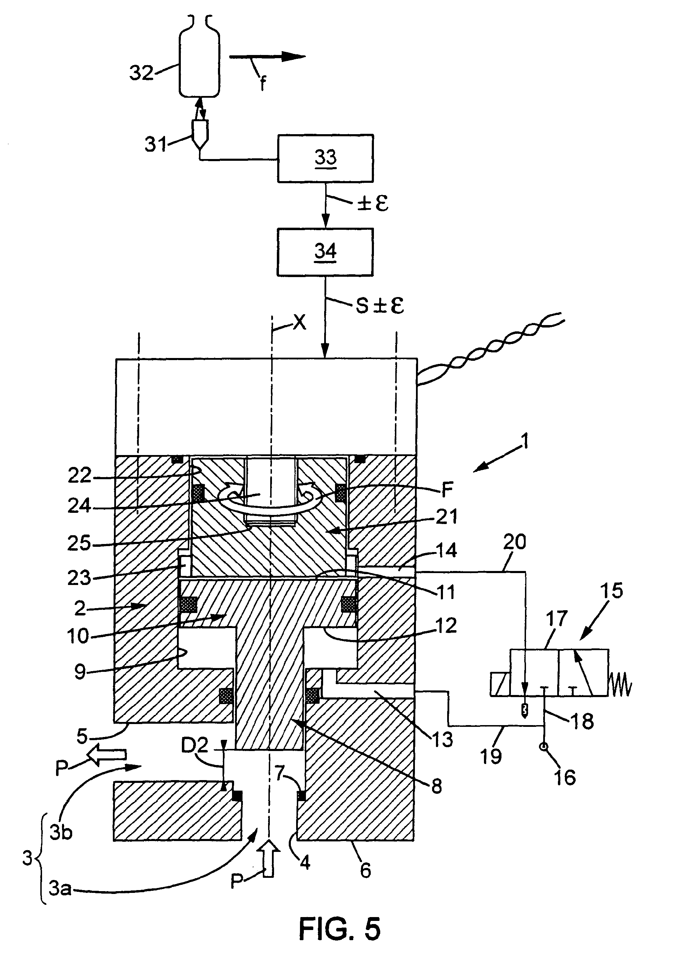

Le mode de réalisation préféré décrit plus haut en référence à la figure 4 peut trouver une application très intéressante reposant sur la possibilité de piloter le débit du fluide à travers une régulation du moteur électrique placée sous la dépendance de capteur(s) approprié(s). Ainsi, cette application vise une installation de fabrication de récipients en matière thermoplastique, notamment en PET, par soufflage ou étirage-soufflage d'ébauches, notamment de préformes, chauffées qui est agencée comme indiqué plus haut et dans laquelle on prévoit comme illustré à la figure 5 au moins un capteur 31 sensible à la valeur d'au moins une caractéristique, notamment physique, des récipients 32 finaux (par exemple la forme et/ou l'épaisseur du fond des récipients comme représenté à la figure 5) ; la capture de l'information souhaitée peut se faire au défilé alors que les récipients 32 finaux sont entraînés (flèche f) par un transporteur à la sortie de l'installation. Le signal de sortie du capteur 31 est envoyé à des moyens 33 de traitement qui sont propres à délivrer un signal représentatif de la valeur détectée de ladite caractéristique, par exemple sous forme d'un signal de correction ±ε. Enfin, des moyens de commande 34 sensibles audit signal sont associés au moteur électrique 30 pour régler la position de la butée 21 et ainsi ajuster le débit du fluide pneumatique sous pression de présoufflage en fonction de la valeur détectée de ladite caractéristique des récipients 32 finaux.

Bien entendu, il est, là encore, possible de prévoir un aménagement analogue de l'installation pour la régulation automatique du fluide de soufflage.

## Revendications

1. Installation de fabrication de récipients en matière thermoplastique, notamment en PET, par soufflage ou étirage-soufflage d'ébauches, notamment de préformes, chauffées, ladite installation comprenant
- au moins un moule de soufflage propre à recevoir une ébauche,
- des moyens de soufflage pneumatique associés audit moule et comportant une tuyère propre à être mise en communication avec ladite ébauche enfermée dans ledit moule, et
- au moins une électrovanne de présoufflage propre à établir une liaison fluidique entre ladite tuyère et une source de fluide pneumatique sous une pression de présoufflage, ladite au moins une électrovanne de présoufflage étant agencée sous forme d'un composant (1) pneumatique comprenant :
. un corps (2) ;
. un conduit (3) s'étendant à travers ce corps (2) pour relier un orifice (4) d'entrée et un orifice (5) de sortie pour ledit fluide pneumatique sous une pression de présoufflage ;
. un siège (7) dans ledit conduit (3) pour un obturateur (8) mobile qui est propre à ouvrir ou fermer ledit conduit (3) ;
. une chambre (9) dans ledit corps (2) ;
. un piston (10) mobile dans ladite chambre (9), ce piston (10) étant solidaire dudit obturateur (8) et possédant deux faces (11, 12) de travail opposées ;
. deux canaux (13, 14) dans ledit corps (2) qui débouchent dans ladite chambre (9) de part et d'autre du piston (10) quelle que soit la position occupée par celui-ci, lesdits canaux (13, 14) étant raccordés à un circuit (15) de commande pneumatique propre à alimenter lesdits canaux (13, 14) en fluide pneumatique de commande pour commander le déplacement dudit piston (10) dans un sens ou dans l'autre dans ladite chambre (9) ; et
. une butée (21) dans ladite chambre (9) pour bloquer le déplacement du piston (10) de manière à définir une position d'ouverture dudit obturateur (8) vis-à-vis dudit siège (7) ;
**caractérisé en ce que** ladite butée (21) est déplaçable dans la chambre (9), ce grâce à quoi la position d'ouverture de l'obturateur (8) par rapport au siège (7) peut être réglée et le débit dudit fluide pneumatique sous une pression de présoufflage dans le conduit (3) peut être ajusté ; et **en ce que** l'installation comporte en outre :
- des moyens moteurs solidarisés au corps (2) et associés à la butée (21), lesdits moyens moteurs comprenant un moteur électrique (30),
- au moins un capteur (31) sensible à la valeur d'au moins une caractéristique, notamment physique, des récipients (32) finaux et des moyens (33) de traitement propres à délivrer un signal (±ε) représentatif de la valeur détectée de ladite caractéristique, et
- des moyens (34) de commande sensibles audit signal (±ε), associés au moteur (30) électrique pour régler la position de la butée (21) et ainsi ajuster le débit du fluide pneumatique sous une pression de présoufflage en fonction de la valeur détectée de ladite caractéristique des récipients (32) finaux.

2. Installation selon la revendication 1, comprenant en outre au moins une électrovanne de soufflage propre à établir une liaison fluidique entre ladite tuyère et une source de fluide pneumatique sous une pression de soufflage supérieure à la susdite pression de présoufflage, ladite au moins une électrovanne de soufflage étant agencée sous forme d'un composant (1) pneumatique comprenant :
. un corps (2) ;
. un conduit (3) s'étendant à travers ce corps (2) pour relier un orifice (4) d'entrée et un orifice (5) de sortie pour ledit fluide pneumatique sous une pression de soufflage ;
. un siège (7) dans ledit conduit (3) pour un obturateur (8) mobile qui est propre à ouvrir ou fermer ledit conduit (3) ;
. une chambre (9) dans ledit corps (2) ;
. un piston (10) mobile dans ladite chambre (9), ce piston (10) étant solidaire dudit obturateur (8) et possédant deux faces (11, 12) de travail opposées ;
. deux canaux (13, 14) dans ledit corps (2) qui débouchent dans ladite chambre (9) de part et d'autre du piston (10) quelle que soit la position occupée par celui-ci, lesdits canaux (13, 14) étant raccordés à un circuit (15) de commande pneumatique propre à alimenter lesdits canaux (13, 14) en fluide pneumatique de commande pour commander le déplacement dudit piston (10) dans un sens ou dans l'autre dans ladite chambre (9) ; et
. une butée (21) dans ladite chambre (9) pour bloquer le déplacement du piston (10) de manière à définir une position d'ouverture dudit obturateur (8) vis-à-vis dudit siège (7) ;
**caractérisé en ce que** ladite butée (21) est déplaçable dans la chambre (9), ce grâce à quoi la position d'ouverture de l'obturateur (8) par rapport au siège (7) peut être réglée et le débit dudit fluide pneumatique sous une pression de soufflage dans le conduit (3) peut être ajusté.

3. Installation selon la revendication 1 ou 2, **caractérisée en ce que** le corps (2) comporte un alésage (22) sensiblement parallèle à la direction de déplacement du piston (10) et débouchant, d'un côté, dans ladite chambre (9) et, de l'autre côté, sur une face externe dudit corps (2) et **en ce que** la butée (21) déplaçable est logée à coulissement axial dans ledit alésage (22).

4. Installation selon l'une des revendications 1 à 3, **caractérisée en ce que** le moteur (30) électrique comprend un arbre (24) rotatif de sortie qui est fileté et engagé dans un alésage (25) taraudé de ladite butée (21).

## Claims

1. Installation for the production of vessels made of thermoplastic material, especially of PET, by blow moulding or stretch blow moulding of heated blanks, especially preforms, said installation comprising
- at least one blowing mould capable of receiving a blank,
- pneumatic blowing means associated with said mould and comprising a pipe which is capable of being placed in communication with said blank enclosed in said mould, and
- at least one preblowing electrovalve which is capable of establishing a fluid connection between said pipe and a source of pneumatic fluid under a preblowing pressure, said at least one preblowing electrovalve being in the form of a pneumatic component (1) comprising:
. a body (2);
. a conduit (3) which extends through the body (2) in order to connect an inlet orifice (4) and an outlet orifice (5) for said pneumatic fluid under a preblowing pressure;
. a seat (7) in said conduit (3) for a movable closure member (8) which is capable of opening or closing said conduit (3);
. a chamber (9) in said body (2);
. a piston (10) which is movable in said chamber (9), the piston (10) being interdependent with said closure member (8) and having two opposite working faces (11, 12);
. two channels (13, 14) in said body (2) which open into said chamber (9) on either side of the piston (10) irrespective of the position occupied by the piston (10), said channels (13, 14) being connected to a pneumatic control circuit (15) which is capable of supplying said channels (13, 14) with pneumatic control fluid in order to control the displacement of said piston (10) in one direction or the other in said chamber (9); and
. a stop (21) in said chamber (9) for blocking the movement of the piston (10) in order to define an opening position of said closure member (8) with respect to said seat (7);
**characterised in that** said stop (21) is displaceable in the chamber (9), by virtue of which the opening position of the closure member (8) with respect to the seat (7) can be tuned and the flow of said pneumatic fluid under a preblowing pressure in the conduit (3) can be adjusted; and **in that** the installation further comprises:
- motor means which are interdependent with the body (2) and are associated with the stop (21), said motor means comprising an electric motor (30),
- at least one sensor (31) which is sensitive to the value of at least one characteristic, especially a physical characteristic, of the final vessels (32), and processing means (33) which are capable of delivering a signal (±ε) representing the detected value of said characteristic, and
- control means (34) sensitive to said signal (±ε) which are associated with the electric motor (30) in order to tune the position of the stop (21) and thus adjust the flow rate of the pneumatic fluid under a preblowing pressure as a function of the detected value of said characteristic of the final vessels (32).

2. Installation according to claim 1, further comprising at least one blowing electrovalve capable of establishing a fluid connection between said pipe and a source of pneumatic fluid under a blowing pressure which is greater than the above-mentioned preblowing pressure, said at least one blowing electrovalve being in the form of a pneumatic component (1) comprising:
. a body (2);
. a conduit (3) which extends through the body (2) in order to connect an inlet orifice (4) and an outlet orifice (5) for said pneumatic fluid under a blowing pressure;
. a seat (7) in said conduit (3) for a movable closure member (8) which is capable of opening or closing said conduit (3);
. a chamber (9) in said body (2);
. a piston (10) which is movable in said chamber (9), the piston (10) being interdependent with said closure member (8) and having two opposite working faces (11, 12);
. two channels (13, 14) in said body (2) which open into said chamber (9) on either side of the piston (10) irrespective of the position occupied by the piston (10), said channels (13, 14) being connected to a pneumatic control circuit (15) which is capable of supplying said channels (13, 14) with pneumatic control fluid in order to control the displacement of said piston (10) in one direction or the other in said chamber (9); and
. a stop (21) in said chamber (9) for blocking the movement of the piston (10) in order to define an opening position of said closure member (8) with respect to said seat (7);
**characterised in that** said stop (21) is displaceable in the chamber (9), by virtue of which the opening position of the closure member (8) with respect to the seat (7) can be tuned and the flow of said pneumatic fluid under a blowing pressure in the conduit (3) can be adjusted

3. Installation according to claim 1 or 2, **characterised in that** the body (2) has a bore (22) which is substantially parallel to the direction of displacement of the piston (10) and opens, on one side, into said chamber (9) and, on the other side, at an outside face of said body (2), and **in that** the movable stop (21) is accommodated to slide axially in said bore (22).

4. Installation according to any one of claims 1 to 3, **characterised in that** the electric motor (30) comprises a rotary outlet shaft (24) which is threaded and engaged in an internally threaded bore (25) in said stop (21).

## Patentansprüche

1. Vorrichtung zur Herstellung von Gefäßen aus thermoplastischem Material, insbesondere aus PET, durch Blasformen oder Streck-Blasziehen von erwärmten Rohlingen, insbesondere von Vorformlingen, wobei die Vorrichtung aufweist:
- mindestens eine Blasform, die geeignet ist, einen Rohling aufzunehmen,
- pneumatische Blasformmittel, die mit der Form verbunden sind, und eine Düse aufweisen, die geeignet ist, um mit dem in der Form eingeschlossenen Rohling in Verbindung gebracht zu werden, und
- mindestens ein Elektrovorblasventil, das geeignet ist, um eine Fluidverbindung zwischen der Düse und einer Pneumatikfluidquelle unter einem Vorblasdruck herzustellen, wobei das mindestens eine Elektrovorblasventil in Form eines Pneumatikelements (1) zusammengesetzt ist, aufweisend:
• einen Körper (2);
• eine Leitung (3), die sich durch den Körper (2) hindurch erstreckt, um eine Einlassöffnung (4) und eine Auslassöffnung (5) für das Pneumatikfluid unter einem Vorblasdruck zu verbinden;
• einen Sitz (7) in der Leitung (3) für ein bewegliches Verschlussstück (8), das geeignet ist, um die Leitung (3) zu öffnen oder zu verschließen;
• eine Kammer (9) in dem Körper (2);
• einen beweglichen Kolben (10) in der Kammer (9), wobei der Kolben (10) mit dem Verschlussstück (8) einstückig ist und zwei entgegengesetzte Arbeitsflächen (11, 12) aufweist;
• zwei Kanäle (13, 14) in dem Körper (2), die auf beiden Seiten des Kolbens (10) unabhängig von seiner eingenommenen Position in die Kammer (9) münden, wobei die Kanäle (13, 14) an einen pneumatischen Steuerkreis (15) angeschlossen sind, der geeignet ist, den Kanälen (13, 14) Pneumatiksteuerfluid zuzuführen, um die Verschiebung des Kolbens (10) in der einen oder anderen Richtung in der Kammer (9) zu steuern; und
• einen Anschlag (21) in der Kammer (9), um die Verschiebung des Kolbens (10) durch Definieren einer Öffnungsposition des Verschlussstücks (8) gegenüber dem Sitz (7) zu blockieren;
**dadurch gekennzeichnet, dass** der Anschlag (21) in der Kammer (9) verstellbar ist, wodurch die Öffnungsposition des Verschlussstücks (8) in Bezug zum Sitz (7) geregelt werden kann und der Ausstoß des Pneumatikfluids unter einem Vorblasdruck in den Kanal (3) eingestellt werden kann; und **dadurch**, dass die Vorrichtung weiterhin aufweist:
- Antriebsmittel, die an dem Körper (2) angebracht und mit dem Anschlag (21) verbunden sind, wobei die Antriebsmittel einen Elektromotor (30) aufweisen,
- mindestens einen Sensor (31), der für mindestens einen Kennwert, insbesondere einen physikalischen, der fertigen Gefäße (32) empfindlich ist und Verarbeitungsmittel, die geeignet sind, ein repräsentatives Signal (±ε) des detektierten Kennwertes abzugeben, und
- Steuerungsmittel (34), die für das Signal (±ε) empfindlich und mit dem Elektromotor (30) verbunden sind, um die Position des Anschlags (21) zu regulieren und folglich den Ausstoß des Pneumatikfluids unter einem Vorblasdruck als Funktion des von den fertigen Behältern (32) detektierten Kennwerts einzustellen.

2. Vorrichtung gemäß Anspruch 1, weiterhin mindestens ein Elektroblasventil aufweisend, das geeignet ist, eine Fluidverbindung zwischen der Düse und einer Pneumatikfluidquelle unter einem Blasdruck herzustellen, der höher ist als der oben genannte Vorblasdruck, wobei das mindestens eine Elektroblasventil in Form eines Pneumatikelements (1) zusammengesetzt ist, aufweisend:
• einen Körper (2);
• eine Leitung (3), die sich durch den Körper (2) hindurch erstreckt, um eine Einlassöffnung (4) und eine Auslassöffnung (5) für das Pneumatikfluid unter einem Vorblasdruck zu verbinden;
• einen Sitz (7) in der Leitung (3) für ein bewegliches Verschlussstück (8), das geeignet ist, um die Leitung (3) zu öffnen oder zu verschließen;
• eine Kammer (9) in dem Körper (2);
• einen beweglichen Kolben (10) in der Kammer (9), wobei der Kolben (10) mit dem Verschlussstück (8) einstückig ist und zwei entgegengesetzte Arbeitsflächen (11, 12) aufweist;
• zwei Kanäle (13, 14) in dem Körper (2), die auf beiden Seiten des Kolbens (10) unabhängig von seiner eingenommenen Position in die Kammer (9) münden, wobei die Kanäle (13, 14) an einen pneumatischen Steuerkreis (15) angeschlossen sind, der geeignet ist, den Kanälen (13, 14) Pneumatiksteuerfluid zuzuführen, um die Verschiebung des Kolbens (10) in der einen oder anderen Richtung in der Kammer (9) zu steuern; und
• einen Anschlag (21) in der Kammer (9), um die Verschiebung des Kolbens (10) durch Definieren einer Öffnungsposition des Verschlussstücks (8) gegenüber dem Sitz (7) zu blockieren;
**dadurch gekennzeichnet, dass** der Anschlag (21) in der Kammer (9) verstellbar ist, wodurch die Öffnungsposition des Verschlussstücks (8) in Bezug zum Sitz (7) geregelt werden kann und der Ausstoß des Pneumatikfluids unter einem Vorblasdruck in den Kanal (3) eingestellt werden kann.

3. Vorrichtung gemäß Anspruch 1 oder 2, **dadurch gekennzeichnet, dass** der Körper (2) eine Bohrung (22) umfasst, die in etwa parallel zur Verschiebungsrichtung des Kolbens (10) ist und an einer Seite in die Kammer (9) und and der anderen Seite in eine Außenseite des Körpers (2) mündet und **dadurch**, dass der verstellbare Anschlag (21) axial verschiebbar in der Bohrung (22) angeordnet ist.

4. Vorrichtung gemäß einem der Ansprüche 1 bis 3, **dadurch gekennzeichnet, dass** der Elektromotor (30) eine rotierende Ausgangswelle (24) umfasst, die ein Gewinde aufweist und über eine Bohrung (25) des Anschlags (21) mit einem Innengewinde verbunden ist.
